# EUROPEAN PATENT APPLICATION

(11) **EP 1 150 192 A1**
(43) Date of publication of application: **31.10.2001**
(21) Application number: 00201535.2
(22) Date of filing: 28.04.2000
(51) Int. Cl.: G05B 19/418

(54) **A method for converting information related to the hardware/software configuration of a distributed control system**

(71) Applicant: ABB Research Ltd., 8050 Zürich (CH)
(72) Inventor: Fay, Alexander, 69221 Dossenheim (DE); Kirmair, Stefan, 69120 Heidelberg (DE); Merker, Stephan, 68723 Schwetzingen (DE); Villa, Valerio, 22020 Gironico (Co) (IT)
(74) Representative: Giavarini, Francesco

(57) **Abstract**

The present invention relates to a method for converting first information having a first format for describing the hardware/software configuration of a first distributed control system, into second information having a second format for describing the hardware/software configuration of a second distributed control system

## Description

The present invention relates to a method for converting information related to the hardware/software (HW/SW) configuration of a distributed control system (DCS).

More particularly, the present invention relates to a method for converting first information having a certain format for describing a first DCS HW/SW configuration, into second information having another format for describing a second DCS HW/SW configuration.

Distributed control systems are largely used in the state of the art with the purpose of controlling industrial processes. Particularly, DCS systems have been conceived with the purpose of coping with the intrinsic distributed nature of said industrial processes, through a physical distribution of control units, which can communicate and exchange data/information.

A DCS can process the data/information acquired from the process and can produce command signals for controllers, which can interface to the process and determine its physical behaviour, so as to guarantee the satisfaction of certain requirements.

Any DCS is typically described by information (data, parameters, program documentation or the like) regarding its particular HW/SW configuration. This information typically comprises:
- information regarding the number, the type and the configuration of the controllers included in the DCS; and/or
- information regarding the number, the type and the configuration of the input/output (I/O) boards connected to the controllers; and/or
- information regarding the number, the type and the configuration of the specific means, which are used for establishing a communication between the controllers; and/or
- information regarding the number, the type and the configuration of the means, which are used for supervising the controllers; and/or
- information regarding the behaviour of the controllers: this information generally comprises the programs that are run by the DCS controllers and other requirements concerning, for example, the timing of said programs; and/or
- information tags, which are useful for identifying the various elements of a DCS.

As mentioned above, the information for describing a DCS HW/SW configuration is characterised by a proper format, which is provided with a proper syntax and a proper semantics. The term "syntax" and the term "semantics" respectively mean a set of codification rules and a set of functional relationships and rules, characterising an information format.

As technology proceeds, a DCS might become obsolete or, more generally, it might arise the need of controlling a certain industrial process with a different DCS, provided with more powerful hardware and software means.

In this case, it is necessary to make provision for stopping the process operation, installing and configuring the new DCS.

In order to minimise the DCS upgrade costs, the information related to the HW/SW configuration of the old DCS is generally reused. This fact implies to reuse technical solutions that have already been tested during the years and that, therefore, ensure a high level of reliability for the process control.

Obviously, these technical solutions could certainly be improved but, at this point, the effort for upgrading the old DCS is certainly reduced if compared with the effort that would be needed for generating "ex novo" the information regarding the HW/SW configuration of the new DCS.

Unfortunately, although the process behaviour remains the same, due to the fact that the DCS is physically changed, there is only a little chance of reusing the information related to the HW/SW configuration of the old DCS, as it is.

The incompatibility between the new and the old DCS HW/SW configuration forces the engineers to reprocess the information regarding the old DCS HW/SW configuration, so as to being able to reconfigure the new DCS.

In practice, the information regarding the old HW/SW configuration is converted into information, which is useful for describing the HW/SW configuration of the new DCS.

A traditional approach for performing this information conversion is to use mapping tables, which allow establishing logic links between the elements of the old DCS and the elements of the new DCS. In practice, these mapping tables represent a guide, which allows creating the elements of the new DCS configuration, basing on the elements of the old DCS configuration.

This traditional approach suffers from several drawbacks.

In fact, the conversion of the information is generally realised in a manual fashion. Although the use of the mentioned mapping tables certainly represents a relief in the conversion process, the common practice has shown that the requested manual work implies significant negative consequences in terms of consistency and completeness of the information conversion.

Moreover, the activity of manually and repetitively interacting with said mapping tables might be a tremendous source of trivial mistakes which, in most cases, can be checked with great difficulty. This fact can have negative consequences when the new DCS is installed and commissioned.

The probability of making trivial mistakes is further increased by the fact that the amount of information to translate may actually be, in many cases, very huge. In fact, it should be considered that a DCS system of normal size generally comprises several controllers, thousands of signals to exchange and thousands of function blocks.

Therefore a big amount of time is needed for performing the information conversion: this fact impacts negatively the costs for upgrading the DCS system.

In order to try to solve these drawbacks, some methods of the state of the art make use of computerised tools. These computerised tools aim at speeding up the conversion operations by means of the automatic conversion of the information related to the input/output configuration of single elements of the old DCS. Very often, these computerised tools aim at the translation of the software programs that are run by said single elements of the old DCS.

In practice, such computerised tools can be considered as partially embedding the mapping tables mentioned above, used in the more traditional approaches.

Although these methods certainly relieve engineers from part of the conversion work amount, it is not possible to consider them as a satisfactory solution for the technical problems above described.

In fact, it should be considered that a DCS is characterised by the presence of a large amount of hidden logical links, between the elements of its HW/SW configuration. Said links can pertain to very different aspects of the DCS and are essential for ensuring a good operation of the DCS.

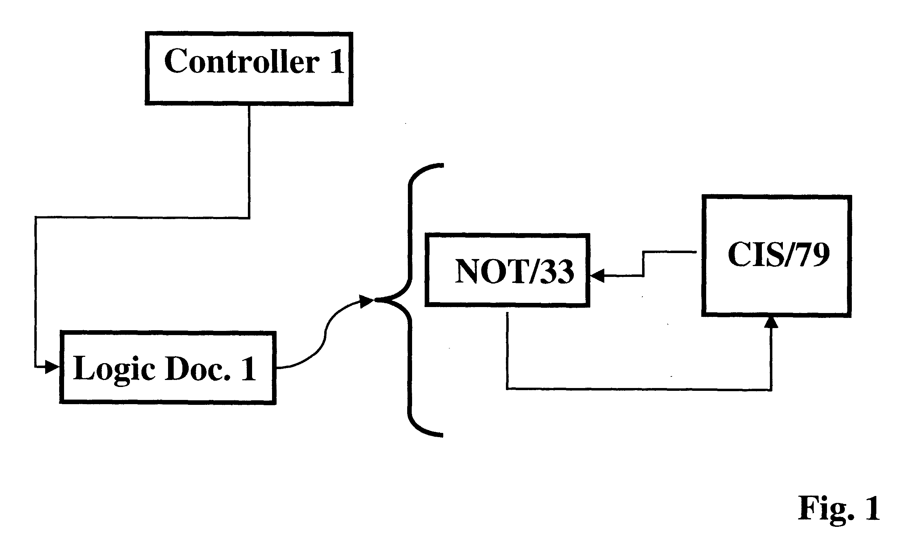

In order to understand better this concept, reference should be made to figure 1, representing a piece of information related to a small portion of the HW/SW configuration of a DCS of the state of the art.

In figure 1, it is represented a controller, which comprises the functional logic blocks named as CIS/79 (Control Interface Slave) and NOT/33. As it appears from figure 1, visible communication links between said two blocks exist. But, the presence of the functional block CIS/79 implies the existence of an I/O board having some analog/digital inputs/outputs.

So, even if these links are not visible in the piece of information represented in figure 1, they are implicitly present and they are equally important for ensuring the correct functionality of the controller.

It appears evident that the task of maintaining the consistency of these hidden links is critical during the conversion process.

Unfortunately, the use of the computerised tools of the state of the art can hardly accomplish this task, due to their capabilities that are intrinsically restricted to particular elements of the DCS HW/SW configuration.

For a better understanding, reference can be made, for example, to the US patent N° 5,512,469. In this patent, a method is proposed for converting the information related to the hardware configuration and the control program of a first programmable logic controller (PLC) into the information related to the to the hardware configuration and the control program of a second PLC.

Although this method is embedded in a computerised tool, as proposed in the mentioned patent, the loss of logical links between different control functions implemented by the PLC can hardly be avoided. In fact, all the hidden links related to different elements of the DCS in which the PLC is included (e.g. between different PLCs or between the PLC and other different controllers) might get lost without any chance to retrieve them.

Neither, this problem can be solved simply using a large computerised architecture which performs a juxtaposition of different computerised tools relying on different DCS elements, because the nature and the presence of said links strictly depend on the characteristics of the DCS, which is necessary to update.

Therefore, a cumbersome amount of manual work is still needed, at least for recovering the hidden links that are characteristic of each DCS HW/SW configuration. This fact means that the mentioned drawbacks are still relevant and basically unsolved in the common practice.

The main aim of the present invention is to provide a method, which allows performing the conversion of the information related to a DCS HW/SW configuration, reducing the drawbacks that have been described above to a negligible level.

Within this scope, another object of the present invention is to provide a method, which allows performing the conversion of the information related to a DCS HW/SW configuration in a consistent and complete manner, minimising the need of manual rework.

Another object of the present invention is to provide a method, which allows performing the conversion of the information related to a DCS HW/SW configuration reducing to a negligible level the loss of the logical hidden connections linking different elements of the DCS.

Another object of the present invention is to provide a method, which allows performing the conversion of the information related to a DCS HW/SW configuration of different DCS systems, independently of their specific structure and configuration.

Not the least object of the present invention is to provide a method, which can be relatively easy embedded on a computerised environment, so as to allow obtaining at least a partially automatic execution of said method.

Thus, the present invention provides a method for converting first information having a first format for describing the HW/SW configuration of a first distributed control system, into second information having a second format for describing the HW/SW configuration of a second distributed control system.

The method according to the present invention, is characterised in that it comprises the phases of:
a) importing said first information into a computerised environment; and
b) converting said first information into third information having a third format for describing the hardware/software of a virtual distributed control system, said virtual distributed control system having a hardware/software configuration independent of the hardware/software configuration of said first distributed control system and said second distributed control system; and
c) storing said third information into first storage means, said first storage means being included in said computerised environment; and
d) acquiring said third information from said first storage means; and
e) converting said third information into said second information;
f) exporting said second information from said computerised environment.

The method, according to the present invention allows achieving the main aim of the present invention.

The computerised tool, according to present invention, performs an indirect conversion of the information related to the HW/SW configuration of the old DCS.

The method, according to the present invention, first converts the information related to the HW/SW configuration of the old DCS into information having a "neutral " format. In fact, said third information can describe a virtual DCS, having HW/SW configuration independent from the HW/SW configuration of the old and the new DCS.

Subsequently, the method, according to the present invention, converts said information having a neutral format into information having a format, which depends on the new DCS configuration.

All the elements of the old DCS configuration are, in practice, represented, during the conversion process, in a "neutral" format, which is characterised by proper syntax and a proper semantics.

It should be noticed that also the visible and hidden links among the DCS elements can be considered "per se" as DCS elements and can be represented in said neutral format. So, they can be converted and handled, minimising the possibilities of missing them during the conversion process.

In this manner, the conversion process pertains to the information related to the old DCS configuration, taken as a whole.

Therefore, the consistency and the reliability of the conversion is necessarily guaranteed and the need of a human intervention is effectively minimised. In fact, the user's manual work is, at this point, restricted to the activity of interacting with the computerised environment, through which the method, according to the present invention, can be embedded.

This fact implies a relevant reduction of the upgrading costs of the DCS.

For a better understanding of the present invention, reference may be made to the detailed description reported hereinafter, taken in conjunction with the accompanying drawings in which:
figure 1 represents a block diagram, which schematically illustrates a piece of information representing a portion of the hardware/software configuration of a DCS of the state of the art;
figure 2 represents a second block diagram, which schematically illustrates the sequence of phases included in the method according to the present invention.

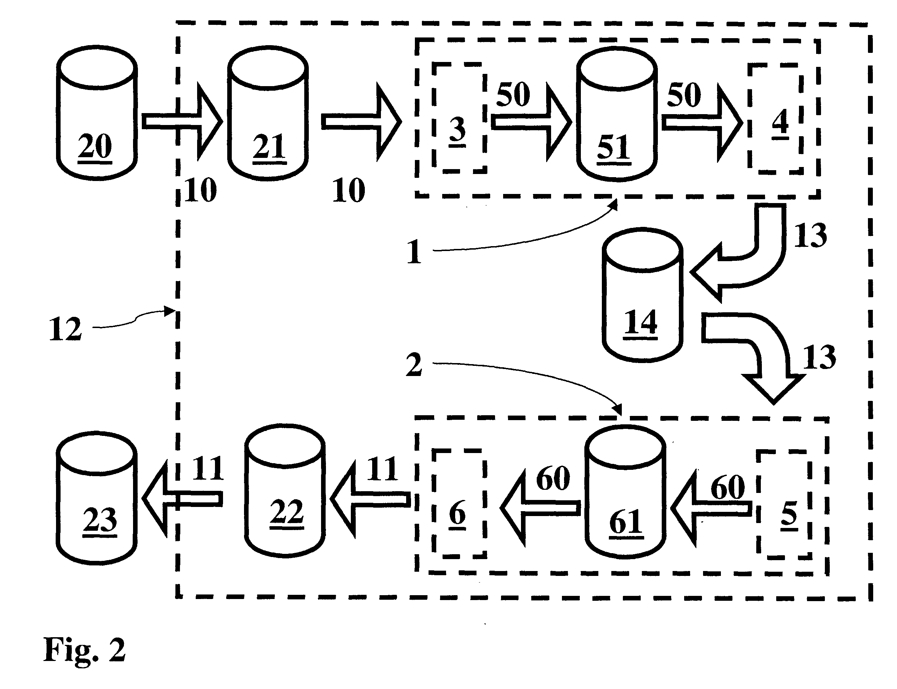

Referring now to figure 2, the method according to the present invention executes the conversion of first information 10, which has a first format for describing the HW/SW configuration of a first DCS (not shown). The information 10 is converted into second information 11, which has a second format for describing the HW/SW configuration of a second DCS (not shown).

The method according to the present invention comprises the phase a) of importing the first information 10 into a computerised environment (dashed block 12 of figure 2).

In a preferred embodiment of the method, according to the present invention, the phase a) can comprise the step a.1) of acquiring the first information 10 from second storage means 20 (for example a database). The second storage means 20 is preferably included in first computerised tools (not shown), used for engineering and configuring the first DCS. Subsequently, the phase a) can provide the step a.2) of storing the first information 10 into third storage means 21 (for example a database) included in the computerised environment 12.

In practice, the step a.1) and the step a.2) provide a direct acquisition of information from a computerised system, which is used for engineering and configuring the first DCS. This embodiment, which can be easily implemented by means of a suitable computerised interface, is particularly advantageous because it allows importing information, remarkably reducing the needed amount of human work. At step a.3) of the phase a), the first information 10 is preferably acquired from the third storage means 21, so as to make it available for the subsequent phases of the method according to the present invention.

At the phase b), the method, according to the present invention, provides the conversion of the information 10 into third information 13. In figure 2, the dashed block 1 schematically represents the conversion process portion provided by said phase b).

The first format of the first information 10 is provided with a first syntax and with a first semantics for describing the HW/SW configuration of the first DCS. The third format of the third information 13 is provided with a third syntax and with a third semantics for describing the HW/SW configuration of the virtual DCS.

In a preferred embodiment of the method according to the present invention, the phase b) comprises the step b.1) of converting (dashed block 3) the first information 10 into a first intermediate information 50. The first intermediate information 50 has a first intermediate format, which is provided with said third syntax and with said first semantics. At step b.2) the first intermediate information 50 can be stored into first intermediate storage means 51 (for example a database), included in the computerised environment 12.

Subsequently, at step b.3) the first intermediate information 50 can be acquired from the storage means 51 and, at step b.4) converted (dashed block 4) into the third information 13.

The embodiment represented by the steps b.1), b.2), b.3) and b.4) represents a remarkable advantage, because the conversion process is no more "monolithic" but is logically split into relatively small subsequent tasks that can be managed by the user in a quite comfortable manner. Moreover, this fact makes the practical implementation of the method according to the present invention much easier.

At the phase c) of the method according to the present invention, the third information is stored into first storage means 14 (for example a database), included in the computerised environment 12.

As mentioned above, the third information 13 has a third format for describing the HW/SW configuration of a virtual DCS (not shown). Said virtual distributed control system is characterised by a HW/SW configuration, which is independent of the HW/SW configuration of said first and second distributed control systems. In practice, the information 13 is characterised by a format, which is substantially "neutral" with respect of the HW/SW configurations of the first DCS and of the second DCS.

This fact allows achieving a separation between the "source" (the HW/SW configuration of the first DCS) and the "target" (the HW/SW configuration of the second DCS) of the information flow. As mentioned above, the advantages of this approach are quite relevant. In fact, all the elements of the HW/SW configuration of the first DCS, including the described hidden and visible logical links, can be logically split and converted separately as independent elements. Moreover, the method, according to the present invention, can be easily applied to different kinds of DCS, without any relevant effort for its implementation.

The representation of the HW/SW configuration of the virtual DCS can be obtained in various manners. In a preferred embodiment of the method, according to the present invention, the third information 13 describes the HW/SW configuration of a virtual DCS by means of the combination of different sets of information. Each set of information comprises pieces of information that are related to non-overlapping aspects of the hardware/software configuration of the virtual DCS.

In this manner, the HW/SW configuration of the virtual DCS is described combining sets of information, which are substantially "orthogonal". In this manner, also the implicit relationships, hidden in the HW/SW configuration of the first DCS, can be easily represented and, therefore, converted, reducing to negligible levels the probability of missing information.

This fact means that, referring again to the example of figure 1, all the hidden links that are implicit in the represented piece of information (i.e. the existence of an I/O board having some analog/digital inputs/outputs) can be retrieved and split into the appropriate aspects. Moreover, they can be represented, according to said third format, as separated elements.

Subsequently, the method according to the present invention provides the phase d) of acquiring from the storage means 14 the third information 13 and the phase e) of converting the third information 13 into said second information 11. In figure 2 the conversion process represented by the phase e) is schematically represented by the dashed block 2.

The second format of the second information 11 is provided with a second syntax and with a second semantics for describing the HW/SW configuration of the second DCS.

In a preferred embodiment of the method according to the present invention, the phase e) comprises the step e.1) of converting (dashed block 5) the third information 13 into a second intermediate information 60. The second intermediate information 60 has a second intermediate format, which is provided with said second semantics and with said third syntax.

At step e.2) the first intermediate information 60 can be stored into first intermediate storage means 61 (for example a database), included in the computerised environment 12.

Subsequently, at step e.3) the second intermediate information 60 can be acquired from the storage means 61 (for example a database) and, at step b.4) converted (dashed block 6) into the third information 11.

The solution represented by the steps e.1), e.2), e.3) and e.4) represent obviously a further remarkable advantage, as mentioned above for steps b.1), b.2), b.3) and b.4).

Subsequently, the method according to the present invention provides the phase f) of exporting the second information 11 out of said computerised environment. In a preferred embodiment, the phase f) comprises the step f.1) of storing the second information 11 into fourth storage means 22, included in the computerised environment 12. Subsequently, the step f.3) of acquiring the second information 11 from the fourth storage means 22 and the step f.4) of storing the second information 11 into fifth storage means 23 (for example a database) are provided. The fifth storage means 23 are advantageously included in second computerised tools out of the computerised environment 12. Said second computerised tools can preferably those used for engineering and configuring the second DCS.

Also this embodiment of the method, according to the present invention, is particularly advantageous due to the fact that it provides exporting information, remarkably reducing the needed amount of human work. Moreover, the second information 11 can be made available to the computerised tools that are used for engineering and configuring the second DCS. The method according to the present invention has proven to be of easy practical implementation.

The computerised environment 12 represents a framework for the practical implementation of the method according to the present invention.

The computerised environment 12 can be realised in practice using computerised tools that are available in the state of the art. Particularly, a personal computer running a suitable multitasking operating system provided with windowing GUI (Graphical User Interface) capabilities might be used. Moreover, a Java virtual machine adapted for said multitasking operating system might be also advantageously used.

In a preferred embodiment of the method, according to the present invention, one or more of the phases from a) to f) can be activated, according to adjustable sequences, by first computerised means (not shown), included in the computerised environment 12. The first computerised means can be represented, for example, by a suitable first programmable computerised interface, available the computerised environment 12.

This embodiment is particularly advantageous because the user is enabled to manage all the transitions of the information during the process flow. In particular, the various phases/steps of the method, according to the present invention, can be performed according to sequences that can be set by the user according to the needs. This fact implies remarkable advantages in terms of flexibility and applicability of the method according to the present invention.

Moreover, by means of the first programmable computerised interface, the user can interact with the flow of the information, optimising the information content, during the conversion process.

These advantages are also increased in another possible embodiment of the method according to the present invention. According to this embodiment, the computerised environment 12 comprises second computerised means (not shown) for logging the sequence of transitions to which a selected information item is subject during one or more of said phases from a) to f).

Obviously, the mentioned information item can be related to one or more aspects of the first or the second or the virtual DCS and therefore it can be selected from said first information and/or from said second information and/or from said third information.

In practice, the second computerised means allows to select the information item according to a predefined set of descriptive attributes, Then, once the information item is selected, the second computerised means allows to build data structures that keep track of the transitions to which said information item is subjected. For example, said data structures can comprise one or more so called "transition graphs" that, being visible to the user, allow describing the complete transition story of the selected item. Obviously, the user can adapt, by the second computerised means, the scope and the extension of the tracing activity.

Also the first computerised means is of easy practical implementation. They can be represented, for example, by a second suitable programmable computerised interface running in the computerised environment 12.

The method, according to the present invention, allows for numerous modifications and variations, all of which are within the scope of the inventive concept. All the details may furthermore be replaced with other technically equivalent elements.

## Claims

1. A method for converting first information having a first format for describing the hardware/software configuration of a first distributed control system, into second information having a second format for describing the hardware/software configuration of a second distributed control system, **characterised in that** it comprises the phases of:
a) importing said first information into a computerised environment;
b) converting said first information into third information having a third format for describing the hardware/software of a virtual distributed control system, said virtual distributed control system having hardware/software configuration independent from the hardware/software configuration of said first distributed control system and said second distributed control system;
c) storing said third information into first storage means, said first storage means being included in said computerised environment;
d) acquiring said third information from said first storage means;
e) converting said third information into said second information;
f) exporting said second information out of said computerised environment.

2. A method, according to the claim 1, **characterised in that** said phase a) comprises the steps of:
a.1) acquiring said first information from second storage means, said second storage means being included in first computerised tools used for engineering and configuring said first distributed control system;
a.2) storing said first information into third storage means, said third storage means being included in said computerised environment;
a.3) acquiring said first information from said third storage means.

3. A method, according to the claim 1, **characterised in that** said phase f) comprises the steps of:
f.1)storing said second information into fourth storage means, said fourth storage means being included in said computerised environment;
f.2)acquiring said second information from said fourth storage means;
f.3)storing said second information into fifth storage means, said fifth storage means being included in second computerised tools used for engineering and
configuring said second distributed control system.

4. A method, according to the claim 1, **characterised in that** said first format of said first information is provided with a first syntax and with a first semantics for describing the hardware/software configuration of said first distributed control system.

5. A method, according to the claim 1, **characterised in that** said second format of said second information is provided with a second syntax and with a second semantics for describing the hardware/software configuration of said second distributed control system.

6. A method, according to the claim 1, **characterised in that** said third format of said third information is provided with a third syntax and with a third semantics for describing the hardware/software configuration of said virtual distributed control system.

7. A method, according to the previous claims, **characterised by** the fact that said phase b) comprises the steps of:
b.1) converting said first information into a first intermediate information having a first intermediate format, said first intermediate format comprising said third syntax and said first semantics;
b.2) storing said first intermediate information into first intermediate storage means, said first intermediate storage means being included in said computerised environment;
b.3) acquiring said first intermediate information from said first intermediate storage means;
b.4) converting said first intermediate information into said third information.

8. A method, according to the claims from 1 to 6, **characterised by** the fact that said phase e) comprises the steps of:
e.1) converting said third information into a second intermediate information having a second intermediate format, said second intermediate format being provided with said third syntax and said second semantics;
e.2) storing said second intermediate information into second intermediate storage means, said second intermediate storage means being included in said computerised environment;
e.3) acquiring said second intermediate information from said second intermediate storage means;
e.4) converting said second intermediate information into said third information.

9. A method, according to one or more of the previous claims, **characterised in that** said third information describes the hardware/software configuration of said virtual distributed control system through the combination of sets of information, said sets of information comprising pieces of information related to non-overlapping aspects of the hardware/software configuration of said virtual distributed control system.

10. A method, according to claim 1, **characterised in that** one or more of said phases from a) to f) is activated, according to adjustable sequences, by first computerised means, said first computerised means being included in said computerised environment.

11. A method, according to claim 1, **characterised in that** said computerised environment comprises second computerised means for logging the sequence of transitions to which a selected information item is subjected during one or more of said phases from a) to f).

12. A method, according to claim 11, **characterised in that** said information item is selected from said first information and/or from said second information and/or from said third information.

13. A method, according to claims 11 and 12 **characterised in that** said second computerised means builds one or more data structures for keeping track of the transitions to which said information item is subjected.

14. A method, according to claim 13 **characterised in that** said data structures comprise one or more transition graphs, visible to the user.

15. A computerised tool **characterised in that** it implements a method for converting first information having a first format for describing the hardware/software configuration of a first distributed control system, into second information having a second format for describing the hardware/software configuration of a second distributed control system, according to one or more of the previous claims.
